# EUROPÄISCHE PATENTSCHRIFT

(11) **EP 3 655 701 B1**
(45) Veröffentlichungstag und Bekanntmachung des Hinweises auf die Patenterteilung: **18.09.2024**
(21) Anmeldenummer: 18743477.4
(22) Anmeldetag: 19.07.2018
(51) Int. Cl.: F23D 14/24

(54) **BRENNER**
BURNER
BRÛLEUR

(30) Priorität: 21.07.2017 DE 102017116529
(43) Veröffentlichungstag der Anmeldung: 27.05.2020
(73) Patentinhaber: Kueppers Solutions GmbH, 44263 Dortmund (DE)
(72) Erfinder: TE KAAT, Jens, 44225 Dortmund (DE)
(74) Vertreter: Meinke, Jochen
(86) Internationale Anmeldenummer: PCT/EP2018/069612
(87) Internationale Veröffentlichungsnummer: WO 2019/016307

(56) Entgegenhaltungen:
- CN-A- 106 907 710
- DE-T2- 69 818 909
- DE-U1- 9 208 993
- US-A- 5 408 830
- US-B1- 6 652 268

## Beschreibung

Die Erfindung betrifft einen Brenner mit einem Gehäuse, an dem ein Brennrohr angeordnet ist, wobei das Brennrohr an dem dem Gehäuse abwandten Ende eine Öffnung aufweist, wobei in dem Brennrohr ein Mischelement vorgesehen ist und der Raum zwischen diesem Mischelement und der Öffnung eine Brennkammer ausbildet, wobei das Gehäuse wenigstens zwei voneinander getrennte Kanäle aufweist, die in dem Mischelement münden, wobei durch die Kanäle und das Mischelement Gase strömen und eine Vermischung dieser Gase erst in der Brennkammer stattfindet.

Solche Brenner, insbesondere Gasbrenner für den industriellen Einsatz, sind Vorrichtungen, die in einem Brennvorgang chemische Energie in thermische Energie umwandeln. Bei diesem Brennvorgang wird wenigstens ein Oxidationsmittel, bevorzugt Luft bzw. Sauerstoff, mit einem Brennstoff in der Brennkammer in einer kontinuierlichen Reaktion unter Wärmeabgabe verfeuert. Die erhitzten Abgase werden über die Öffnung an die freie Umgebung abgegeben und können beispielsweise in Trocknungsanlagen, thermischen Nachverbrennungseinrichtungen, Umwälzsystemen, Härteöfen oder sonstigen verfahrenstechnischen Anlagen genutzt werden. Als Brennstoff können beispielsweise alle handelsüblichen, gereinigten Gase wie Stadt-, Fern-, Erd- und Flüssiggas sowie deren Gemische mit Luft verfeuert werden.

Die aus dem Stand der Technik allgemein bekannten Brenner lassen sich in zwei Kategorien einteilen, wobei in die erste Kategorie Brenner fallen, bei denen das Oxidationsmittel mit dem Brennstoff als Gemisch in die Brennkammer eingedüst wird. Solche Brenner werden auch als Vorgemischbrenner bezeichnet. Die Brenner, die in die zweite Kategorie fallen, haben im Gegensatz zu den Brennern der ersten Kategorie eine getrennte Zuleitung des Oxidationsmittels sowie des Brennstoffes bis zur Brennkammer, sodass eine Vermischung beider Stoffe erst in der Brennkammer stattfindet.

Die Brenner der ersten Kategorie haben zwar den Vorteil, dass das Gemisch aus Oxidationsmittel und Brennstoff in einem homogenen Zustand in der Brennkammer zur Verfügung steht, jedoch aber auch den Nachteil, dass eine absolute Sicherheit gegen Flammrückschläge nicht gegeben ist. Bei Brennern der zweiten Kategorie sind durch die getrennte Zuführung des Oxidationsmittels und des Brennstoffes Flammrückschläge ausgeschlossen, jedoch ist die Homogenität des Gemisches in der Brennkammer nicht optimal im Vergleich zur erzielten Homogenität des Gemisches eines Brenners der ersten Kategorie.

Sowohl aus der US 2016/0377293 A1, der US 2016/0223201 A1 als auch aus der GB 2 536 965 A sind additive Fertigungsverfahren für das Herstellen von Bauteilen für Brenner bekannt, da sich dies gerade für komplex gestaltete Bauteile anbietet. Aus der US 5 408 830 ist ein gattungsgemäßer Brenner bekannt.

Die Erfindung bezieht sich auf einen Brenner der zweiten Kategorie und stellt sich im Lichte des oben aufgeführten Spannungsfeldes zwischen Sicherheit und optimaler Verbrennung durch einen hohen Grad der Homogenität des Gemisches die Aufgabe, einen Brenner der zweiten Kategorie anzugeben, der eine verbesserte Homogenität des Gemisches in der Brennkammer erzielt, um den Verbrennungsvorgang zu optimieren.

Diese Aufgabe wird bei einem Brenner der eingangs bezeichneten Art erfindungsgemäß mit den Merkmalen des Patentanspruches 1 gelöst.

Es wird somit ein Brenner zur Verfügung gestellt, bei dem das Mischelement mit einem additiven Fertigungsverfahren hergestellt ist. Zu den additiven Fertigungsverfahren zählen unter anderem auch Pulverbettverfahren, insbesondere das selektive Laserschmelzen sowie das selektive Lasersintern. Durch die Fertigung des Mischelementes mit einem additiven Fertigungsverfahren lässt sich eine neue Art der Zuführung des Oxidationsmittels und des Brennstoffes in die Brennkammer erzielen, die dahingehend optimierbar ist, dass eine homogene Mischung über einen breiten Regelungsbereich des Verhältnisses des Oxidationsmittels zum Brennstoff erzielbar ist und hierdurch eine vollkommene Verbrennung über den gesamten Leistungsbereich des Brenners gewährleistet wird.

Dieses Mischelement weist wenigtens zwei getrennte Zwischenkanäle auf, die sich in Richtung der Brennkammer in Strömungsrichtung verzweigen. Zwar sind aus der US 2016/0223201 A1 bereits Zwischenkanäle bekannt, die sich verzweigen und dann ausmünden, allerdings betrifft diese Druckschrift keinen Gasbrenner, sondern einen Kraftstoffinjektor für ein Gasturbinentriebwerk. Es handelt sich um einen Kraftstoffinjektor, der mit Gasbrennern der ersten Kategorie zu vergleichen ist, bei dem das Oxidationsmittel mit dem Brennstoff als Gemisch in die Brennkammper eingedüst wird (ein sogenannter Vorgemischbrenner).

Die Erfindung betrifft jedoch einen Brenner der zweiten Kategorie, bei dem die getrennte Zuleitung des Oxidationsmittels sowie des Brennstoffes über zwei Kanäle bis zur Brennkammer erfolgt. Die US 2016/0223201 A1 weist jedoch nur einen Hauptzuführkanal auf, wie sich deutlich aus Fig. 2 ergibt. Daran angeordnet ist ein Knoten, aus dem innerhalb der Turbine zwei (nicht voneinander getrennte) Teilleitungen abzweigen.

Ein nicht zu unterschätzendes Problem beim Betrieb eines Brenners ist die Entstehung von schädlichen Stickoxiden, die beim Verbrennungsprozess entstehen können. Dabei haben die Ausgestaltung des Brenners, insbesondere der Brennkammer, und die Zuführung des Oxidationsmittels und des Brennstoffes einen erheblichen Einfluss auf die Bildung der Stickoxide beim Verbrennungsvorgang. Ein additiv gefertigtes Mischelement kann dahingehend optimiert werden, dass die Entstehung solcher Stickoxide entweder vollständig unterdrückt oder auf ein Minimum reduziert wird. Denkbar ist in diesem Zusammenhang, dass der Brenner eine Abgasrückführung vorsieht, bei der schon ausgebrannte Abgase mit einem geringen Sauerstoffanteil und einem vergleichsweise hohen Kohlenstoffdioxidanteil in die Brennkammer eingeführt werden. Die Injektion solcher inerten Abgase führt zu einer deutlichen Reduktion der Entstehung der Stickstoffoxide.

Ferner ist auch eine Ausgestaltung des Brenners und/oder Mischelementes dahingehend denkbar, dass die Abgasrückführung eine vor Erwärmung des in die Brennkammer zugeführten Oxidationsmittels und/oder Brennstoffes vorsieht.

Weitere Ausgestaltungen der Erfindung ergeben sich aus den Unteransprüchen.

Dabei ist zweckmäßig, dass das Mischelement einstückig ausgebildet ist. Ein einstückiges Mischelement hat den Vorteil, dass die Zuführung des Oxidationsmittels und des Brennstoffes in die Brennkammer bei einer kompakten Abmessung des Mischelementes optimiert werden kann. Außerdem kann die Zuführung des Oxidationsmittels und des Brennstoffes in einer Art und Weise vorgesehen sein, die mit einem mehrstückigen Mischelement nicht realisierbar ist. Zugleich sieht die Erfindung vor, dass das Mischelement wenigstens zwei getrennte Zwischenkanäle aufweist, die sich in Richtung der Brennkammer in Durchströmungsrichtung verzweigen. Die Verzweigung der Zwischenkanäle sorgt dafür, dass das Oxidationsmittel und/oder der Brennstoff nicht nur lokal an einer Stelle in die Brennkammer injiziert werden, sondern an einer Vielzahl von möglichen Positionen, sodass sich eine weitgehend homogene Vermischung des Oxidationsmittels und des Brennstoffs schon im Anfangsbereich der Brennkammer ergibt. Der Anfangsbereich der Brennkammer ist dabei als der Bereich anzusehen, der einen geringeren Abstand zum Mischelement als zur Öffnung des Brenners aufweist. Die homogene Vermischung des Oxidationsmittels und des Brennstoffes unterdrückt nicht nur die Entstehung von Stickoxiden, sondern erhöht auch die Effizienz des Brenners und reduziert damit die Brennstoffkosten.

Ferner ist bevorzugt vorgesehen, dass drei bis fünf Zwischenkanäle vorgesehen sind. Diese Auswahl stellt ein Optimum zwischen dem Aufwand der Konstruktion des Mischelementes und dessen fertigungstechnischen Anforderungen sowie der zu erzielenden Vorteile bezüglich einer optimalen Verbrennung dar.

In einer weiteren Ausgestaltung ist vorgesehen, dass die Zwischenkanäle in einer Vielzahl von Austrittsöffnungen münden, wobei bei wenigstens einem Zwischenkanal der Austritts-Querschnitt gegenüber dem Kanal-Querschnitt vermindert ist. Die Verminderung des Austritts-Querschnittes bietet den Vorteil, dass auf der Seite des Mischelementes, die der Brennkammer zugewandt ist, eine Vielzahl von Austrittsöffnungen vorgesehen sein können, die eine optimale Vermischung des Oxidationsmittels und des Brennstoffes ermöglichen. Andererseits ist es weiterhin möglich die Mischelemente einem hohen Volumenstrom an Gasen zuzuführen, da die zu den Mischelementen führenden Kanäle einen vergleichsweise großen Durchmesser aufweisen.

Weiterhin ist vorgesehen, dass jede einzelne Austrittsöffnung mit geeigneten Vermischungs-, Verwirbelungs- und/oder Vernebelungselementen für die Gase beim Austritt aus dem Mischelement ausgestattet ist. Durch diese Elemente werden die Gase beim Austritt turbulent verwirbelt, sodass sich das Oxidationsmittel mit dem Brennstoff besonders homogen vermischen kann. Vorteilhaft hieran ist, dass die Homogenität der Mischung des Oxidationsmittels und des Brennstoffes schon beim Eintritt in den Anfangsbereich der Brennkammer zur Verfügung steht.

Eine weitere Ausgestaltung sieht vor, dass an den Austrittsöffnungen Drallelemente, Prallelemente, Strömungsabrisskanten, Staukanten, Nuten, Mischdüsen, Mischventile und/oder Auslasskrümmer vorgesehen sind. Hierunter ist nicht zu verstehen, dass alle Austrittsöffnungen die gleichen Elemente aufweisen, sondern dass je nach Position der Austrittsöffnung eines der vorgenannten Elemente, welches zu einer insgesamt verbesserten Homogenität der Mischung führt, vorgesehen ist. Dies ermöglicht eine vielfältige Kombination verschiedenster Elemente, sodass das Mischelement an die Anforderungen bestimmter Brennerklassen angepasst werden kann.

Eine besondere Ausgestaltung der Erfindung sieht vor, dass wenigstens einer der Zwischenkanäle helixförmige Nuten aufweist. Hierbei kann beispielsweise die jeweilige Nut einen rechteckigen Querschnitt aufweisen oder auch rautenförmig ausgebildet sein. Durch das Einbringen von helixförmigen Nuten in die Zwischenkanäle kann die Eintrittsgeschwindigkeit des jeweiligen Gases in die Brennkammer kontrolliert werden, um eine Vermischung des Oxidationsmittels und des Brennstoffes mit einem hohen Grad an Homogenität zu erreichen.

Eine weitere besondere Ausgestaltung der Erfindung sieht vor, dass die Austrittsöffnungen dergestalt angeordnet sind, dass die Gase eine homogene Mischung in der Brennkammer erreichen. Dadurch wird die Effizienz des Brenners gesteigert und gleichzeitig die Entstehung von schädlichen Stickoxiden unterdrückt. Die Zuführung des Oxidationsmittels und des Brennstoffes kann über mehrere Kanäle erfolgen, wobei in Abhängigkeit vom Leistungsbereich beispielsweise einzelne Zuführungen im Bereich des Gehäuses des Brenners blockiert oder geöffnet werden. Hierdurch kann eine vollständige Verbrennung über den gesamten Leistungsbereich eines Brenners erzielt werden.

Außerdem ist bevorzugt vorgesehen, dass ein UV- oder IR-Flammenfühler auf der Austrittsseite des Mischelementes vorgesehen ist. Hierdurch lässt sich der Verbrennungsprozess kontinuierlich überwachen, um gegebenenfalls die Zuführung von Oxidationsmitteln und/oder Brennstoff dergestalt anzupassen, dass der Verbrennungsprozess nach den gewünschten Kriterien verläuft. Hierzu kann der Flammenfühler mit einer geeigneten Steuer- bzw. Regeleinheit informationstechnisch verbunden sein, wobei diese Steuer- oder Regeleinheit beispielsweise im Gehäuse des Brenners vorgesehen sein kann.

Erfindungsgemäß ist vorgesehen, dass durch eine oder mehrere der Zwischenkanäle Abgas aus dem Brennraum in Richtung des Gehäuses zurückströmen kann. Insbesondere kann das zurückströmende Abgas die in Richtung Brennkammer einströmenden Gase über die Wandung der Zwischenkanäle vorwärmen. Da die kalte Brennluft dabei die heißen abgasführenden Kanäle umströmt, wird die Brennluft vorgewärmt. Dies erhöht die Effizienz des Brenners im Sinne eines Recuperator-Brenners, wobei die besonderen Vorteile des im 3D-Druck hergestellten Wärmetauschers voll zum Tragen kommen. Es ergibt sich hierdurch ein sehr kompakter Wärmetauscher innerhalb der Mischeinheit mit gutem Wirkungsgrad.

Weitere Merkmale, Einzelheiten und Vorteile der Erfindung ergeben sich aufgrund der nachfolgenden Beschreibung sowie anhand der Zeichnungen. Einander entsprechende Gegenstände oder Elemente sind in allen Figuren mit dem gleichen Bezugszeichen versehen. Es zeigt
- Fig. 1: eine schematische Darstellung eines erfindungsgemäßen Brenners,
- Fig. 2: eine perspektivische Ansicht eines erfindungsgemäßen Mischelementes, welches als Zwei-Kanalsystem ausgebildet ist,
- Fig. 3: eine fiktive Explosionszeichnung des Mischelementes aus Fig. 2,
- Fig. 4: eine eingangsseitige Ansicht des Mischelementes aus Fig. 2,
- Fig. 5: eine ausgangsseitige Ansicht des Mischelementes aus Fig. 2,
- Fig. 6: eine Schnittdarstellung des Mischelementes aus Fig. 2 entlang der Linie A-A,
- Fig. 7: eine perspektivische Ansicht eines erfindungsgemäßen Mischelementes, welches als Drei-Kanalsystem ausgebildet ist,
- Fig. 8: eine fiktive Explosionszeichnung des Mischelementes aus Fig. 7,
- Fig. 9: eine eingangsseitige Ansicht des Mischelementes aus Fig. 7,
- Fig. 10: eine ausgangsseitige Ansicht des Mischelementes aus Fig. 7,
- Fig. 11: eine perspektivische Ansicht eines erfindungsgemäßen Mischelementes, welches als Vier-Kanalsystem ausgebildet ist,
- Fig. 12: eine fiktive Explosionszeichnung des Mischelementes aus Fig. 11,
- Fig. 13: eine eingangsseitige Ansicht des Mischelementes aus Fig. 11,
- Fig. 14: eine ausgangsseitige Ansicht des Mischelementes aus Fig. 11,
- Fig. 15: eine perspektivische Ansicht eines erfindungsgemäßen Mischelementes,
- Fig. 16: eine Variante von Fig. 15 mit angedeuteten Gaspfeilen sowie
- Fig. 17: eine eingangsseitige Ansicht des Mischelementes mit einem Rezirkulator.

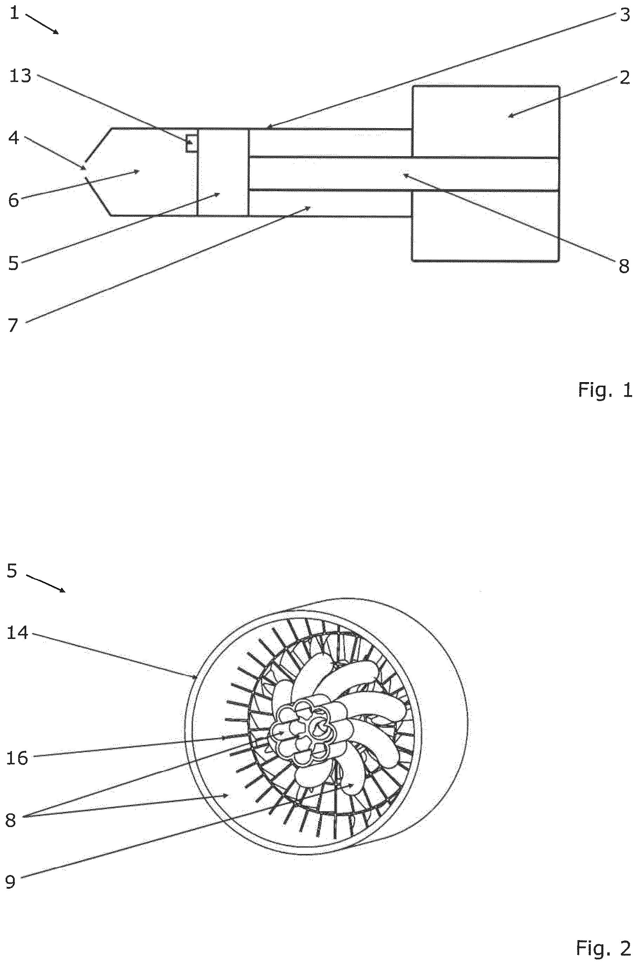

In Fig. 1 ist eine schematische Darstellung eines erfindungsgemäßen Brenners gezeigt, der ein Gehäuse 2 aufweist, an dem ein Brennrohr 3 angeordnet ist, wobei das Brennrohr 3 an dem dem Gehäuse 2 abwandten Ende eine Öffnung 4 aufweist. In dem Brennrohr 3 ist ein Mischelement 5 vorgesehen und der Raum zwischen diesem Mischelement 5 und der Öffnung 4 bildet eine Brennkammer 6 aus. In diesem Ausführungsbeispiel verläuft ein erster Kanal 8 wenigstens teilweise durch das Gehäuse 2 und das Brennrohr 3. Das Raumvolumen bzw. die Zwischenkammer 7 zwischen dem Brennrohr 3 und dem ersten Kanal 8 bildet einen weiteren Kanal aus.

Damit weist das Gehäuse 2 weist wenigstens zwei voneinander getrennte Kanäle 8 auf, die in dem Mischelement 5 münden, wobei durch die Kanäle 8 und das Mischelement 5 Gase propagieren bzw. strömen und eine Vermischung dieser Gase erst in der Brennkammer 6 stattfindet. Die Verbindung zwischen dem Gehäuse 2 und dem Kanal, der durch die Zwischenkammer 7 ausgebildet wird, ist aus Übersichtsgründen nicht dargestellt. In der Brennkammer 6 ist ein UV- oder IR-Flammenfühler auf der Austrittsseite des Mischelementes 5 vorgesehen, um den Verbrennungsprozess kontinuierlich zu überwachen. Nicht dargestellt ist eine Zündvorrichtung, die das Gasgemisch in der Brennkammer 6 entzündet.

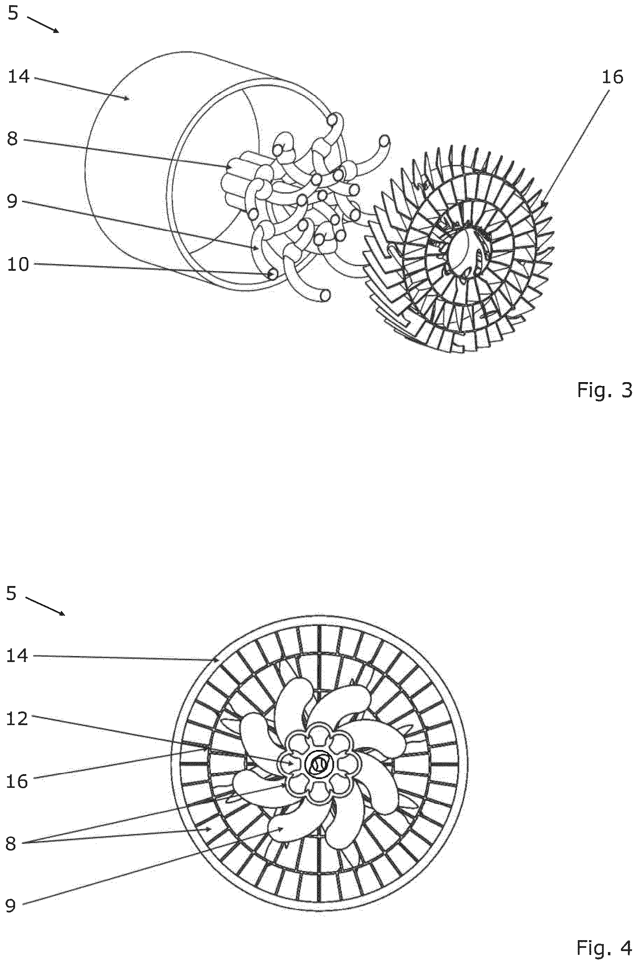

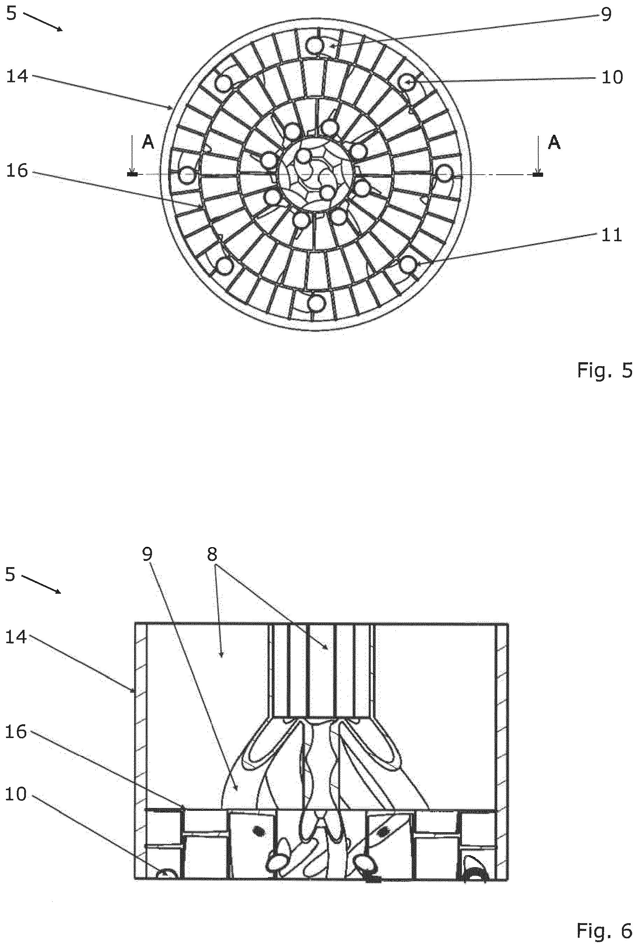

Das Mischelement 5, welches als Zwei-Kanalsystem ausgebildet ist, ist in Fig. 2 in einer perspektivischen Ansicht, in Fig. 3 in einer fiktiven Explosionszeichnung, in Fig. 4 eingangsseitig und in Fig. 5 ausgangsseitig sowie in Fig. 6 als Schnittdarstellung gezeigt. Die fiktive Explosionszeichnung in Fig. 3 dient nur der Übersicht und das Auftrennen der verschiedenen Komponenten des Mischelementes 5 ist in Wirklichkeit nicht möglich, denn es würde zu einer Zerstörung des Mischelementes 5 führen, da das Mischelement 5 mittels eines additiven Fertigungsverfahrens einstückig ausgebildet ist. Unter eingangsseitig ist die Seite des Mischelementes 5 im eingebauten Zustand im Brenner 1 zu verstehen, die an die Zwischenkammer 7 angrenzt. Unter ausgangsseitig ist die Seite des Mischelementes 5 im eingebauten Zustand im Brenner 1 zu verstehen, die an die Brennkammer 6 angrenzt.

Das Mischelement 5 hat bevorzugt eine rohrartige Außenwand 14, die mit radial nach innen ragenden Strömungswiderstandselementen 16 versehen ist, wobei die Strömungswiderstandselemente 16 bevorzugt quer zur Längssymmetrieachse bzw. Rotationsachse der Außenwand 14 ausgerichtet sind. Die Strömungswiderstandselemente 16 können in radialer Richtung durch Rohrabschnitte getrennt sein, die einen kleineren Durchmesser und eine kürzere Längsausdehnung aufweisen als die Außenwand 14. Hierdurch ist es möglich, dass die Strömungswiderstandselemente 16 in Abhängigkeit von ihrer radialen Position unter verschiedenen Winkeln quer zur Längssymmetrieachse der Außenwand 14 angeordnet sind. Die Strömungswiderstandselemente 16 können vorzugsweise schaufelradartig ausgebildet sein.

Der innere bzw. erste Kanal 8, durch den vorzugsweise der gasförmige Brennstoff geführt wird, verzweigt sich in eine Vielzahl von Zwischenkanälen 9, die die Strömungswiderstandselemente 16 und ihre dazugehörigen Rohrabschnitte durchsetzen. Die Zwischenkanäle 9 weisen Austrittsöffnungen 10 auf, die in der Brennkammer 6 münden. Mögliche Drallelemente, Prallelemente, Strömungsabrisskanten, Staukanten, Nuten, Mischdüsen, Mischventile und/oder Auslasskrümmer an den Austrittsöffnungen 10 sind übersichtshalber nicht dargestellt. Der zweite Kanal 8 bzw. die Zwischenkammer 7 für das Oxidationsmittel wird durch den Raum gebildet, der durch die Außenwand 14 und den Kanal 8 sowie seinen Zwischenkanälen 9 umgrenzt ist. Vorteilhaft an dieser Ausführungsform ist, dass die Zwischenkanäle 9 selbst zusätzliche Strömungswiderstandselemente darstellen. Somit kommt den Zwischenkanälen 9 nicht nur die Funktion zu, den Brennstoff in die Brennkammer zu transportieren, sondern auch zur Verwirbelung des Oxidationsmittels beizutragen. Der Kanal-Querschnitt 12 des ersten Kanales 8 ist in diesem Ausführungsbeispiel größer gewählt als der Querschnitt der Austrittsöffnungen 10, um eine gleichmäßige Verteilung des Brennstoffes zu erzielen.

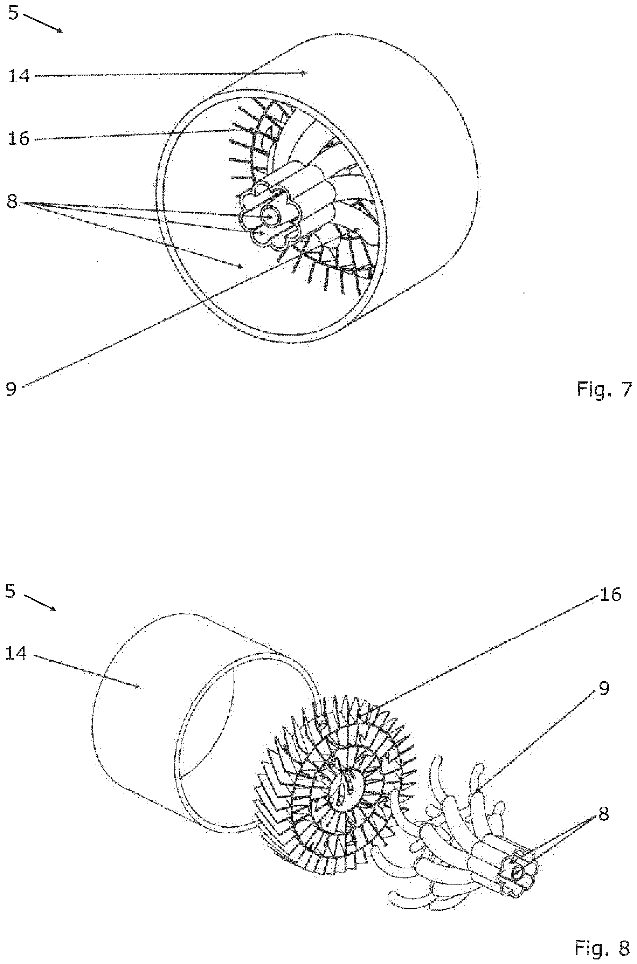

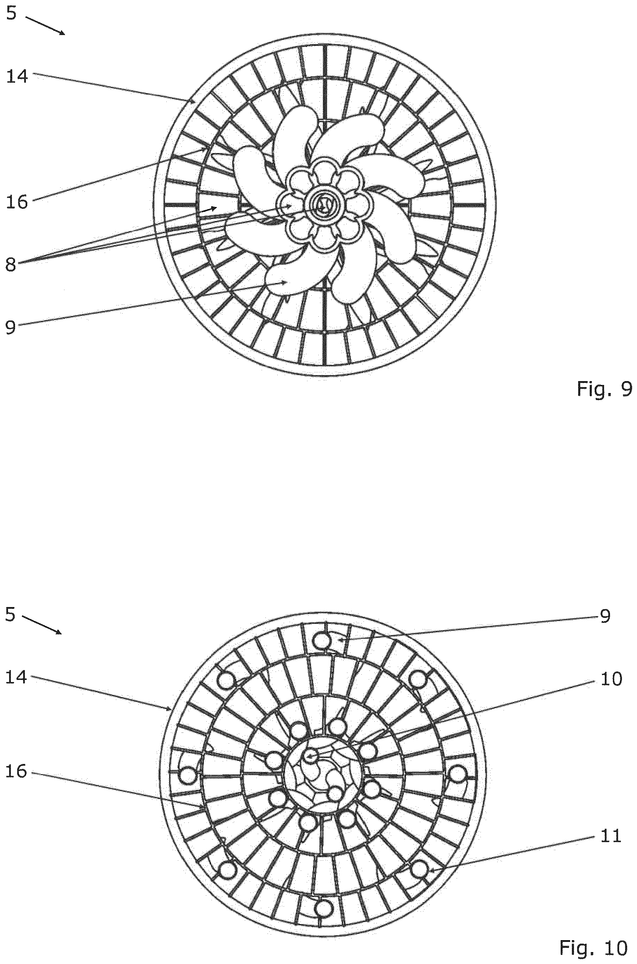

Ein weiteres Mischelement 5, welches als Drei-Kanalsystem ausgebildet ist, ist in Fig. 7 in einer perspektivischen Ansicht, in Fig. 8 in einer fiktiven Explosionszeichnung, in Fig. 9 eingangsseitig und in Fig. 10 ausgangsseitig gezeigt. Die fiktive Explosionszeichnung in Fig. 8 dient nur der Übersicht und das Auftrennen der verschiedenen Komponenten des Mischelementes 5 ist in Wirklichkeit nicht möglich.

Im Gegensatz zum Zwei-Kanalsystem weist das Drei-Kanalsystem einen zusätzlichen Kanal 8 auf, der hier beispielsweise im ersten Kanal 8 angeordnet ist. Dieser zusätzliche Kanal 8 verfügt wiederum über eigene Zwischenkanäle 9, die die Strömungswiderstandselemente 16 und ihre dazugehörigen Rohrabschnitte durchsetzen. Dieser zusätzliche Kanal 8 kann zum Beispiel dazu genutzt werden, um zusätzlichen Brennstoff in die Brennkammer 6 zu injizieren und dadurch den Brennprozess zu optimieren.

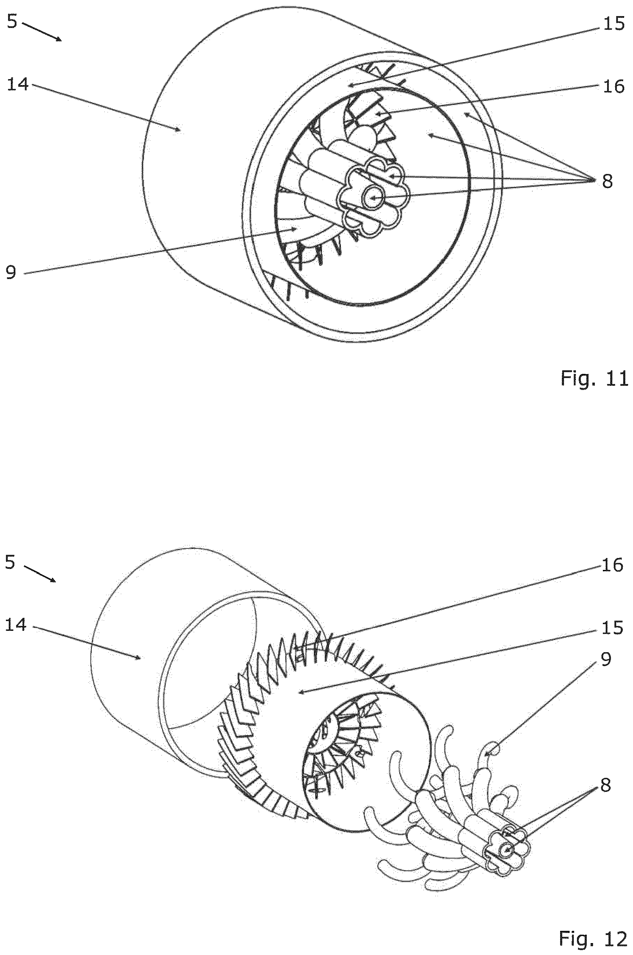

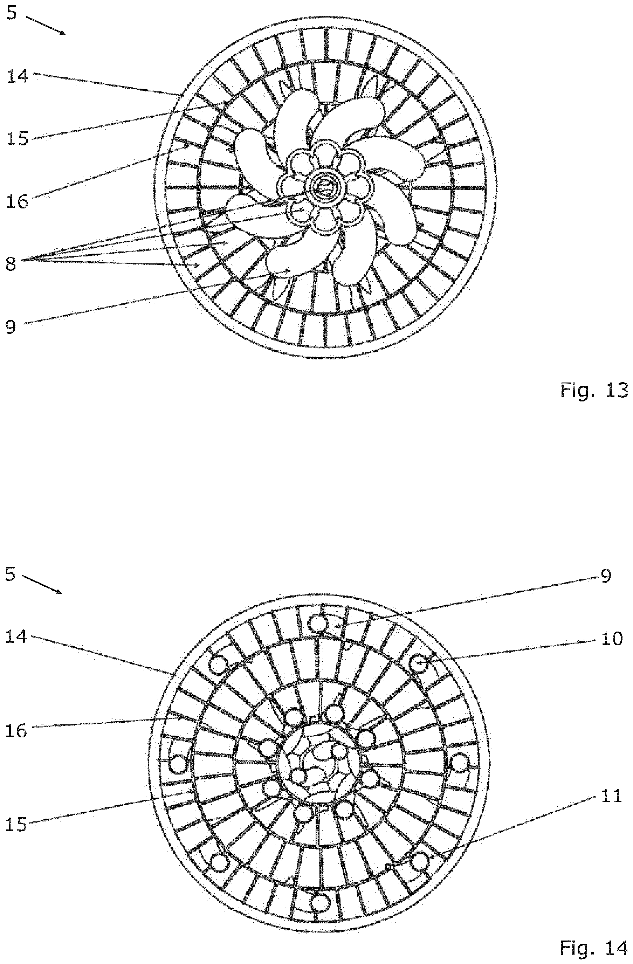

Ein besonderes Mischelement 5, welches als Vier-Kanalsystem ausgebildet ist, ist in Fig. 11 in einer perspektivischen Ansicht, in Fig. 12 in einer fiktiven Explosionszeichnung, in Fig. 13 eingangsseitig und in Fig. 14 ausgangsseitig gezeigt. Die fiktive Explosionszeichnung in Fig. 12 dient nur der Übersicht und das Auftrennen der verschiedenen Komponenten des Mischelementes 5 ist in Wirklichkeit nicht möglich.

Im Gegensatz zum Drei-Kanalsystem weist das Vierkanal-Kanalsystem eine rohrartige Zwischenwand 15 auf, die einen kleineren Durchmesser als die Außenwand 14 aufweist, aber im Wesentlichen eine identische Längserstreckung.

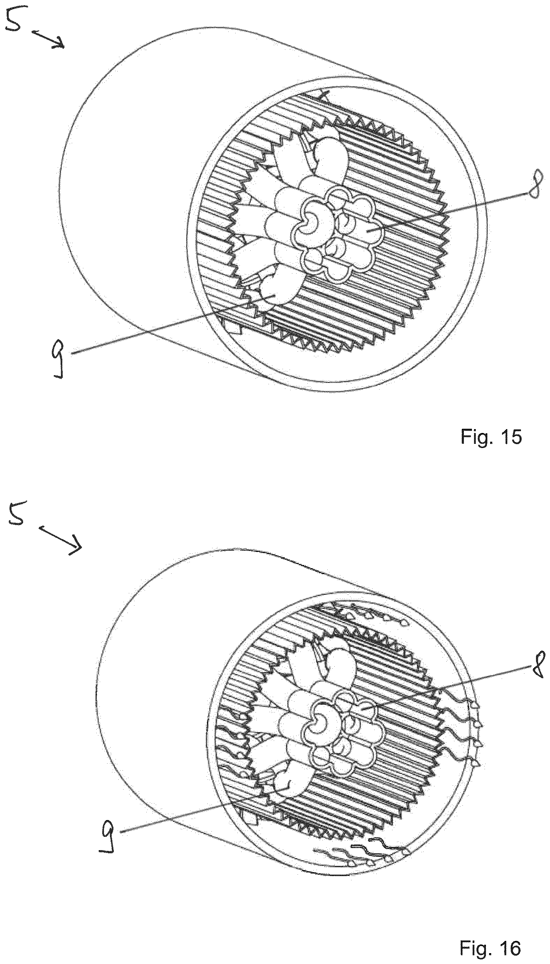

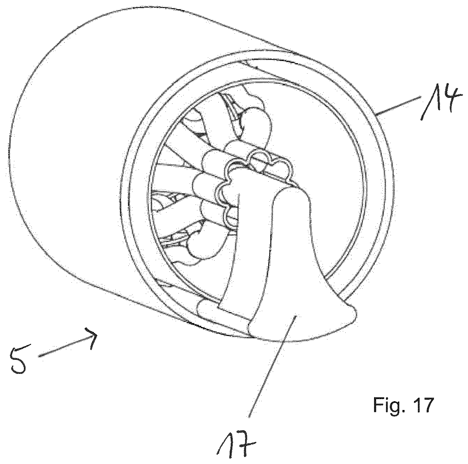

Wie insbesondere aus den Fig. 15 und 16 hervorgeht, kann die Brennluft durch die Innenkanäle 8 in die Brennkammer 6 einströmen und durch einen der Außenkanäle 8 wieder ausströmen. Um die Strömungsrichtung zu ändern und das nach innen strömende Abgas wieder der Brennluft zuzuführen, ist ein Rezirkulator 17 vorgesehen (Fig. 17).

Natürlich ist die Erfindung nicht auf die dargestellten Ausführungsbeispiele beschränkt. Weitere Ausgestaltungen sind möglich, ohne den Grundgedanken zu verlassen. Es versteht sich von selbst, dass die Zuführung des Oxidationsmittels und des Brennstoffes für einen Brenner mit einem Mischelement, welches als Drei-Kanalsystem oder Vier-Kanalsystem ausgebildet ist, entsprechend angepasst werden muss. Ferner ist die Anzahl der Kanäle nicht auf die oben beispielhaft dargestellten Ausführungsbeispiele beschränkt. Je nach Vorgaben und Einsatzgebiet des Brenners können auch mehr Kanäle sinnvoll sein.

### Bezugszeichenliste:

- 1: Brenner
- 2: Gehäuse
- 3: Brennrohr
- 4: Öffnung
- 5: Mischelement
- 6: Brennkammer
- 7: Zwischenkammer
- 8: Kanal
- 9: Zwischenkanal
- 10: Austrittsöffnung
- 11: Austritts-Querschnitt
- 12: Kanal-Querschnitt
- 13: UV- oder IR-Flammenfühler
- 14: Außenwand
- 15: Zwischenwand
- 16: Strömungswiderstandselement
- 17: Rezirkulator

## Patentansprüche

1. Brenner (1) mit einem Gehäuse (2), an dem ein Brennrohr (3) angeordnet ist, wobei das Brennrohr (3) an dem dem Gehäuse (2) abwandten Ende eine Öffnung (4) aufweist, wobei in dem Brennrohr (3) ein Mischelement (5) vorgesehen ist und der Raum zwischen diesem Mischelement (5) und der Öffnung (4) eine Brennkammer (6) ausbildet, wobei das Gehäuse (2) wenigstens zwei voneinander getrennte Kanäle (8) aufweist, die in dem Mischelement (5) münden, wobei durch die Kanäle (8) und das Mischelement (5) Gase strömen und eine Vermischung dieser Gase erst in der Brennkammer (6) stattfindet, wobei das Mischelement (5) wenigstens zwei getrennte Zwischenkanäle (9) aufweist, die sich in Richtung der Brennkammer (6) in Durchströmungsrichtung verzweigen,
**dadurch gekennzeichnet, dass** das Mischelement (5) mit einem additiven Fertigungsverfahren hergestellt ist, und
dass durch einen oder mehrere der Zwischenkanäle (9) Abgas aus der Brennkammer (6) in Richtung des Gehäuses (2) zurückströmen kann.

2. Brenner (1) nach Anspruch 1,
**dadurch gekennzeichnet,**
**dass** das Mischelement (5) einstückig ausgebildet ist.

3. Brenner (1) nach Anspruch 1 oder 2,
**dadurch gekennzeichnet,**
**dass** drei bis fünf Zwischenkanäle (9) vorgesehen sind.

4. Brenner (1) nach einem oder mehreren der Ansprüche 1 bis 3,
**dadurch gekennzeichnet,**
**dass** die Zwischenkanäle in einer Vielzahl von Austrittsöffnungen (10) münden, wobei bei wenigstens einem Zwischenkanal der Austritts-Querschnitt (11) gegenüber dem Kanal-Querschnitt (12) vermindert ist.

5. Brenner (1) nach Anspruch 4,
**dadurch gekennzeichnet,**
**dass** jede einzelne Austrittsöffnung (10) mit Vermischungs-, Verwirbelungs- und/oder Vernebelungselementen für die Gase beim Austritt aus dem Mischelement (5) ausgestattet ist.

6. Brenner (1) nach Anspruch 4 oder 5,
**dadurch gekennzeichnet,**
**dass** an den Austrittsöffnungen (10) Drallelemente, Prallelemente, Strömungsabrisskanten, Staukanten, Nuten, Mischdüsen, Mischventile und/oder Auslasskrümmer vorgesehen sind.

7. Brenner (1) nach einem oder mehreren der Ansprüche 1 bis 6,
**dadurch gekennzeichnet,**
**dass** wenigstens einer der Zwischenkanäle (9) helixförmige Nuten aufweist.

8. Brenner (1) nach einem oder mehreren der Ansprüche 4 bis 6,
**dadurch gekennzeichnet,**
**dass** die Austrittsöffnungen (10) dergestalt angeordnet sind, dass die Gase durch die Vielzahl der Austrittsöffnungen (10) mit Verminderung des Austritts-Querschnittes (11) gegenüber dem Kanal-Querschnitt (12) mit getrennt ansteuerbaren Zwischenkanälen (9) eine homogene Mischung in der Brennkammer (6) erreichen.

9. Brenner (1) nach einem oder mehreren der Ansprüche 1 bis 8,
**dadurch gekennzeichnet,**
**dass** ein UV- oder IR-Flammenfühler (13) auf der Austrittsseite des Mischelementes (5) vorgesehen ist.

10. Brenner (1) nach einem oder mehreren der Ansprüche 1 bis 9, 19941
**dadurch gekennzeichnet,**
**dass** das rückströmende Abgas Wärme an die in Richtung Brennkammer (6) einströmenden Gase über die Wandung der Zwischenkanäle (9) abgibt.

## Claims

1. Burner (1) with a housing (2) against which a burner pipe (3) is arranged, wherein the burner pipe (3) has an opening (4) at the end facing away from the housing (2), wherein in the burner pipe (3) a mixing element (5) is provided and the space between this mixing element (5) and the opening (4) forms a combustion chamber (6), wherein the housing (2) has at least two ducts (8) separated from one another which open out in the mixing element (5), wherein gases flow through the ducts (8) and the mixing element (5) and a mixing of these gases takes place first in the combustion chamber (6), wherein the mixing element (5) has at least two separate intermediate ducts (9) which branch in the direction of the combustion chamber (6) in throughflow direction,
**characterised in that** the mixing element (5) is manufactured using an additive manufacturing method, and
that exhaust gas from the combustion chamber (6) can flow back in the direction of the housing (2) through one or several of the intermediate ducts (9).

2. Burner (1) according to claim 1,
**characterized in that**
the mixing element (5) is formed integrally.

3. Burner (1) according to claim 1 or 2,
**characterized in that**
three to five intermediate ducts (9) are provided.

4. Burner (1) according to one or more of claims 1 to 3,
**characterized in that**
the intermediate ducts open out in a plurality of outlet openings (10), wherein in the case of at least one intermediate duct the outlet cross-section (11) is reduced with respect to the duct cross-section (12).

5. Burner (1) according to claim 4,
**characterized in that**
each individual outlet opening (10) is equipped with mixing elements, turbulence elements and/or nebulizing elements for the gases at their emergence out of the mixing element (5).

6. Burner (1) according to claim 4 or 5,
**characterized in that**
at the outlet openings (10) swirl elements, impact elements, flow-stripping edges, stubs, grooves, mixing nozzles, mixing valves and/or exhaust manifolds are provided.

7. Burner according to one or more of claims 1 to 6,
**characterized in that**
at least one of the intermediate ducts (9) has helical grooves.

8. Burner (1) according to one or more of claims 4 to 6,
**characterized in that**
the outlet openings (10) are arranged such that, by means of the plurality of the outlet openings (10) with reduction of the outlet cross-section (11) with respect to the duct cross-section (12) with separately controllable intermediate ducts (9), the gases achieve a homogeneous mixture in the combustion chamber (6).

9. Burner (1) according to one or more of claims 1 to 8,
**characterized in that**
an UV or IR flame sensor (13) is provided at the outlet side of the mixing element (5).

10. Burner according to one or more of claims 1 to 9,
**characterized in that**
the backflowing exhaust gas delivers heat to the gases flowing in in the direction of the combustion chamber (6) via the wall of the intermediate ducts (9).

## Revendications

1. Brûleur (1) avec un boîtier (2), au niveau duquel un tube de combustion (3) est disposé, dans lequel le tube de combustion (3) présente une ouverture (4) au niveau de l'extrémité opposée au boîtier (2), dans lequel un élément mélangeur (5) est prévu dans le tube de combustion (3) et l'espace entre cet élément mélangeur (5) et l'ouverture (4) forme une chambre de combustion (6), dans lequel le boîtier (2) présente au moins deux canaux (8) séparés l'un de l'autre qui débouchent dans l'élément mélangeur (5), dans lequel des gaz circulent à travers les canaux (8) et l'élément mélangeur (5), et un mélange de ces gaz a lieu seulement dans la chambre de combustion (6), dans lequel l'élément mélangeur (5) présente au moins deux canaux intermédiaires (9) séparés qui se ramifient dans le sens d'écoulement dans la direction de la chambre de combustion (6),
**caractérisé en ce que** l'élément mélangeur (5) est produit avec un procédé de fabrication additive, et
**en ce que** du gaz d'échappement issu de la chambre de combustion (6) peut refluer dans la direction du boîtier (2) par le biais d'un ou plusieurs des canaux intermédiaires (9).

2. Brûleur (1) selon la revendication 1,
**caractérisé en ce que**
l'élément mélangeur (5) est réalisé d'un seul tenant.

3. Brûleur (2) selon la revendication 1 ou 2,
**caractérisé en ce que**
trois à cinq canaux intermédiaires (9) sont prévus.

4. Brûleur (1) selon une ou plusieurs des revendications 1 à 3,
**caractérisé en ce que**
les canaux intermédiaires débouchent dans une pluralité d'ouvertures de sortie (10), dans lequel la section transversale de sortie (11) est réduite par rapport à la section transversale de canal (12) dans au moins un canal intermédiaire.

5. Brûleur (1) selon la revendication 4,
**caractérisé en ce que**
chaque ouverture de sortie (10) individuelle est équipée d'éléments de mélange, de tourbillon et/ou de pulvérisation pour les gaz au moment de la sortie de l'élément mélangeur (5).

6. Brûleur (1) selon la revendication 4 ou 5,
**caractérisé en ce que**
des éléments de rotation, des éléments d'impact, des arêtes de rupture d'écoulement, des arêtes de congestion, des rainures, des buses mélangeuses, des vannes mélangeuses et/ou des tubulures d'échappement sont prévus au niveau des ouvertures de sortie (10).

7. Brûleur (1) selon une ou plusieurs des revendications 1 à 6,
**caractérisé en ce que**
au moins un des canaux intermédiaires (9) présente des rainures hélicoïdales.

8. Brûleur (1) selon une ou plusieurs des revendications 4 à 6,
**caractérisé en ce que**
les ouvertures de sortie (10) sont disposées de telle sorte que les gaz atteignent un mélange homogène dans la chambre de combustion (6) à travers la pluralité des ouvertures de sortie (10) avec une diminution de la section transversale de sortie (11) par rapport à la section transversale de canal (12) avec des canaux intermédiaires (9) à commande séparée.

9. Brûleur (1) selon une ou plusieurs des revendications 1 à 8,
**caractérisé en ce que**
un détecteur de flammes à UV ou IR (13) est prévu sur le côté sortie de l'élément mélangeur (5).

10. Brûleur (1) selon une ou plusieurs des revendications 1 à 9,
**caractérisé en ce que**
le gaz d'échappement refluant émet de la chaleur vers les gaz entrant en direction de la chambre de combustion (6) à travers la paroi des canaux intermédiaires (9).
